# EUROPÄISCHE PATENTSCHRIFT

(11) **EP 1 337 308 B1**
(45) Veröffentlichungstag und Bekanntmachung des Hinweises auf die Patenterteilung: **11.08.2004**
(21) Anmeldenummer: 01988615.9
(22) Anmeldetag: 23.10.2001
(51) Int. Cl.: B01D 35/30, B01D 36/04, B04B 5/00, F16N 39/06

(54) **AGGREGATEMODUL EINER BRENNKRAFTMASCHINE**
MODULE OF UNITS FOR AN INTERNAL COMBUSTION ENGINE
MODULE D'UNITES POUR MOTEUR A COMBUSTION INTERNE

(30) Priorität: 25.10.2000 DE 20018278 U
(43) Veröffentlichungstag der Anmeldung: 27.08.2003
(73) Patentinhaber: Hengst GmbH & Co. KG, 48147 Münster (DE)
(72) Erfinder: BAUMANN, Dieter, 48268 Greven (DE)
(74) Vertreter: Schulze Horn, Kathrin
(86) Internationale Anmeldenummer: PCT/EP2001/012199
(87) Internationale Veröffentlichungsnummer: WO 2002/034359

(56) Entgegenhaltungen:
- EP-A- 0 816 645
- DE-A- 4 420 868
- DE-A- 19 650 033
- FR-A- 2 772 636
- US-A- 4 640 772
- US-A- 5 603 829
- US-A- 5 975 245
- "LA FILTRATION DES HUILES MOTEURS" REVUE TECHNIQUE DIESEL, ETAI. BOULOGNE-BILLANCOURT, FR, Nr. 167, 1991, Seiten 9-10,12-13,, XP000201066 ISSN: 0037-2579

## Beschreibung

Die vorliegende Erfindung betrifft ein Aggregatemodul einer Brennkraftmaschine, wobei das Modul als erstes Aggregat eine Vorrichtung zum Abtrennen von Verunreinigungen aus dem Schmieröl der Brennkraftmaschine umfaßt, wobei die Vorrichtung einen Filtereinsatz, eine mittels durchströmenden Schmieröls antreibbare Freistrahlzentrifuge, mindestens einen Zuleitungskanal für zu reinigendes Schmieröl, einen Ableitungskanal für durch den Filtereinsatz geströmtes Schmieröl und einen Rücklaufkanal für durch die Zentrifuge geströmtes Schmieröl aufweist und wobei die Zentrifuge über dem Filtereinsatz in einem gemeinsamen Gehäuse angeordnet ist.

Aufgrund strenger werdender Abgasvorschriften tritt das Problem auf, daß das Schmieröl von Brennkraftmaschinen, insbesondere Dieselmotoren, zunehmend mit feinen Partikeln, insbesondere Ruß, belastet wird. Um diese für die Schmierung nachteiligen Partikel aus dem Schmieröl zu entfernen, ist eine verbesserte Filterung des Schmieröls erforderlich. Dies kann theoretisch durch die Verwendung eines Filtereinsatzes mit einer geringeren Porosität, d.h. einer höheren Filterfeinheit, erreicht werden. Nachteilig besitzt aber ein solcher Filtereinsatz einerseits einen höheren Strömungswiderstand und andererseits eine geringere Standzeit als die bisher verwendeten Filtereinsätze. Beides ist für den Betrieb der Brennkraftmaschine nachteilig und somit unerwünscht. Eine Abhilfe durch Vergrößerung des Filtereinsatzes ist zwar theoretisch möglich, aber aufgrund fehlenden freien Einbauraums in der Praxis meist ausgeschlossen.

Eine zweite Möglichkeit der Verbesserung der Filterung des Schmieröls besteht darin, den Filtereinsatz mit einer Zentrifuge zu kombinieren, wie dies aus dem Stand der Technik an sich bekannt ist. Bei einem vorgegebenen Einbauraum kann die Integration der Zentrifuge dadurch erreicht werden, daß der Filtereinsatz in seiner Höhe verringert wird und die Zentrifuge im selben Gehäuse oberhalb des Filtereinsatzes angeordnet wird, wie dies in der US 5 603 829 A und in der DE 44 20 868 A beschrieben ist. Allerdings stellt sich nun das Problem, daß von der Zentrifuge ein Rücklaufkanal für die Abführung des durch die Zentrifuge geströmten Schmieröls zusätzlich geschaffen werden muß. Dabei muß dieser Rücklaufkanal einen ausreichend großen Querschnitt aufweisen, damit das nach dem Durchströmen der Zentrifuge drucklose Schmieröl unter Schwerkraftwirkung ausreichend schnell abfließen kann, üblicherweise in die Ölwanne der Brennkraftmaschine. Bei einem vorgegebenen und nicht vergrößerbaren Einbauraum kann ein solcher Rücklaufkanal nur auf Kosten der Größe des Filtereinsatzes in die Vorrichtung zum Reinigen des Schmieröls integriert werden, was aber den Nachteil hat, daß die Filterfläche des Filtereinsatzes übermäßig verkleinert wird.

Aus US 4 640 772 A ist eine Ölreinigungsvorrichtung bekannt, bei der an einem gemeinsamen Sockel eine Ölzentrifuge sowie ein oder zwei Ölfilter angebracht sind. Sowohl die Zentrifuge als auch jeder Ölfilter besitzt jeweils ein eigenes Gehäuse, wobei sich die einzelne Gehäuse in zwei bzw. drei rechtwinklig zueinander verlaufenden Richtungen vom Sockel weg erstrecken. Damit bilden die einzelnen Gehäuse bei dieser Vorrichtung ersichtlich eine sehr platzraubende Anordnung, die für die beengten Einbauverhältnisse im Motorraum von modernen Kraftfahrzeugen nicht mehr geeignet ist.

Aus US 5 975 245 A ist ein Aggregatemodul bekannt, bei dem in einem Gehäuse ein Öl-Wasser-Wärmetauscher, ein Ölfilter und eine Ölzentrifuge angeordnet sind. In einer Ausführung dieses Moduls, bei der die Zentrifuge ganz oben im Gehäuse vorgesehen ist, führt aus dem oberen Gehäusebereich ein externer Kanal in Form einer Rohrleitung mit großem Querschnitt vom Gehäuse zur Ölwanne der Brennkraftmaschine. Durch diesen Kanal mit großem Querschnitt kann das drucklose Öl nach seinem Austritt aus dem Zentrifugenrotor unter Schwerkraftwirkung ausreichend schnell zur Ölwanne zurückfließen. Nachteilig benötigt der Kanal mit seinem großen Querschnitt einen erheblichen Einbauraum, der in vielen Anwendungsfällen nicht zur Verfügung steht. Bei einer alternativen Ausführung des Moduls ist die Zentrifuge im unteren Teil des Gehäuses vorgesehen. Hierdurch kann zwar eine unmittelbare Rückführung des drucklosen Schmieröls über einen entsprechend großen Kanal über eine Flanschverbindung zur Ölwanne der beiden Kraftmaschinen erfolgen, jedoch tritt hier der Nachteil auf, daß zum Zweck einer Wartung, daß heißt insbesondere zum Austausch des Zentrifugenrotors, sowohl der Öl-Wasser-Wärmetauscher als auch der Filtereinsatz sowie zwei entnehmbare Zwischenwände aus dem Gehäuse ausgebaut werden müssen. Hierdurch wird ein sehr hoher Demontage- und Montageaufwand verursacht, der in der Praxis unerwünscht ist.

In der Veröffentlichung "LA FILTRATION DES HUILES MO-TEURS" REVUE TECHNIQUE DIESEL, ETAI. BOULOGNE-BILLANCOURT, FR, Nr. 167, 1991, Seiten 9-10, 12-13, ist ein Aggregatemodul zeichnerisch dargestellt, daß zwei parallel geschaltete Öl-Wasser-Wärmetauscher und einen Ölfilter umfaßt. Das Gehäuse des Ölfilters und das Gehäuse des einen Wärmetauschers verlaufen etwa parallel zueinander; beide genannten Gehäuse wiederum verlaufen etwa rechtwinklig zu einem Gehäuse des zweiten Wärmetauschers. Damit ist auch diese Anordnung ersichtlich platzraubend und für viele Einsatzfälle mit beengten Einbauverhältnissen nicht einsetzbar.

Aus EP 0 816 645 A ist ein an ein Kurbelgehäuse eines Verbrennungsmotors anflanschbares Trägerteil für Aggregate der Schmierölversorgung und -Behandlung entnehmbar. Dabei besitzt das Trägerteil mindestens Aufnahmen für ein Ölfilter, einen Ölkühler, ein Öldruckregelventil und einen Bypaßkanal für einen Bypass zu der Ölführung durch Ölkühler. Ölfilter und Ölkühler besitzen dabei jeweils eigene Gehäuse, zwischen denen ein Freiraum verbleibt, der lediglich für die Unterbringung von Schrauben zur Verbindung der Gehäuse mit dem Trägerteil genutzt wird. Damit wird auch bei dieser Konstruktion noch keine gute Raumausnutzung erzielt. In DE 196 50 033 A wird eine Baugruppe für eine Verbrennungskraftmaschine beschrieben, wobei die Baugruppe zu einem Modul zugefaßte Bauteile enthält und wobei Mittel, mit denen das Modul mit der Maschine verbindbar ist, vorgesehen sind. Als wesendlich Bauteile enthält dieses Modul einen Ölkühler, einen Ölfilter und wenigstens einen Ölabscheider. Alle genannten Bauteile besitzen jeweils ein eigenes Gehäuse, mit dem sie an einem Grundkörper des Moduls angebaut sind. Auch dieses Aggregatemodul benötigt noch einen großen Einbauraum, was einer guten Raumausnutzung im Motorraum einer Brennkraftmaschine widerspricht.

Aus FR 2 772 636 A ist ein Aggregatemodul bekannt, das zur Reinigung einer verschmutzten Flüssigkeit dient und das zwei Filter sowie eine Zentrifuge umfaßt. Die beiden Filter und die Zentrifuge besitzen jeweils ein eigenes Gehäuse, wobei das Gehäuse des zweiten Filters und der Zentrifuge etwa rechtwinklig zum Gehäuse des ersten Filters entweder in derselben Richtung oder in zwei entgegengesetzten Richtungen verlaufen. Damit fehlt es auch diesem Aggregatemodul an einer kompakten Bauweise.

Für die vorliegende Erfindung stellt sich deshalb die Aufgabe, ein Aggregatemodul der eingangs genannten Art zu schaffen, bei dem für den Rücklaufkanal ein ausreichend großer Querschnitt zur Verfügung gestellt wird, ohne daß dafür ein vorgegebener Einbauraum überschritten werden muß und ohne daß dafür der Filtereinsatz verkleinert oder sonst in seiner Funktion beeinträchtigt werden muß.

Die Lösung dieser Aufgabe gelingt erfindungsgemäß mit einem Aggregatemodul der eingangs genannten Art, welches dadurch gekennzeichnet ist,
- daß das Modul ein weiteres Aggregat der Brennkraftmaschine umfaßt,
- daß das weitere Aggregat ein Gehäuse aufweist, das neben dem Gehäuse der Vorrichtung angeordnet und mit dem Gehäuse lösbar verbunden ist, und
- daß die beiden Gehäuse zwischen sich durch dichtend aneinanderliegende, wandförmige Gehäusebereiche den Rücklaufkanal bilden.

Vorteilhaft wird bei dem erfindungsgemäßen Aggregatemodul der zwischen den Gehäusen der beiden das Modul bildenden Aggregate ursprünglich vorhandene Freiraum genutzt. Dieser Freiraum war bisher bei dem oben beschriebenen Stand der Technik entweder ungenutzt oder wurde lediglich für die Unterbringung einer Verbindung zwischen den Gehäusen der beiden Aggregate verwendet. Dieser ganz oder weitgehend ungenutzte freie Raum wird nun für die Anordnung des Rücklaufkanals verwendet. Der Aufwand für die Änderung der beteiligten Aggregate hält sich in vertretbaren Grenzen, weil für die Bildung des Rücklaufkanals wandförmige Gehäusebereiche der beiden miteinander verbundenen Gehäuse genutzt werden. Zweckmäßig sind dabei diese Gehäusebereiche einstückig mit dem jeweiligen übrigen Gehäuse ausgebildet, insbesondere bei Gehäusen in Form von Leichtmetall-Druckgußteilen oder Kunststoff-Spritzgußteilen. Auf diese Weise beansprucht der Rücklaufkanal keinen zusätzlichen Einbauraum in der Umgebung des Aggregatemoduls, so daß irgendwelche Änderungen an anderen Teilen der Brennkraftmaschine oder des Kraftfahrzeuges, die sich in unmittelbarer Umgebung des Aggregatemoduls befinden, nicht erforderlich sind. Weiterhin beansprucht der Rücklaufkanal keinen Raum im Inneren des Gehäuses des ersten Aggregats, so daß der darin angeordnete Filtereinsatz wegen des Rücklaufkanals in seiner Größe vorteilhaft nicht verkleinert werden muß.

Eine erste Weiterbildung des Aggregatemoduls sieht vor, daß die beiden Gehäuse jeweils eine im wesentlichen zylindrische Grundform mit etwa parallel oder unter einem spitzen Winkel zueinander verlaufenden Mittelachsen aufweisen und daß die den Rücklaufkanal bildenden Gehäusebereiche in der Hauptsache jeweils durch annähernd tangential zu den Gehäusemantelflächen verlaufende Wände gebildet sind. Auf diese Weise wird der zwischen den beiden Aggregaten bzw. deren Gehäusen vorhandene Raum optimal ausgenutzt. Zugleich bleiben die Gehäuse bei ihrer Herstellung als Druck- oder Spritzgußteile problemlos entformbar.

Eine dazu alternative Ausgestaltung des Aggregatemoduls sieht vor, daß die beiden Gehäuse jeweils eine im wesentlichen zylindrische Grundform mit etwa parallel oder unter einem spitzen Winkel zueinander verlaufenden Mittelachsen aufweisen und daß die den Rücklaufkanal bildenden Gehäusebereiche in der Hauptsache einerseits durch annähernd tangential zur Mantelfläche des einen Gehäuses verlaufende Wände und andererseits durch einen einen Teil des anderen Gehäuses bildenden flachen Deckel gebildet sind. Auch bei dieser Ausführung ergibt sich eine gute Ausnutzung des Raums zwischen den Gehäusen der beiden Aggregate, wobei hier lediglich die Trennung zwischen den beiden Gehäusen im Bereich der dichtend aneinanderliegenden Gehäusebereiche eine andere Lage einnehmen kann. Die Auswahl zwischen den beiden Varianten des Aggregatemoduls richtet sich im wesentlichen nach den Entformungsgegebenheiten bei der Herstellung der beiden Gehäuse sowie nach den Einbaugegebenheiten bei der Montage der beiden Gehäuse und des Aggregatemoduls insgesamt.

Bevorzugt liegen die Gehäusebereich in einer ebenen Flanschfläche unter Zwischenlage einer Dichtung deckungsgleich aneinander an. Eine solche ebene Flanschfläche ist einerseits in der Herstellung einfach und andererseits hinsichtlich der Montage und Abdichtung der beiden Gehäuseteile unproblematisch. Zudem liegt im Rücklaufkanal das Schmieröl in einem drucklosen Zustand vor, so daß keine hohen Ansprüche an die Dichtung der Verbindung zu stellen sind.

Weiter ist bevorzugt vorgesehen, daß die ebene Flanschfläche parallel oder unter einem spitzen Winkel zur Mittelachse des Gehäuses der Vorrichtung und/oder des Gehäuses des weiteren Aggregats verläuft.

Um die Verbindung zwischen den Gehäusen einerseits mechanisch fest und andererseits flüssigkeitsdicht zu machen, sind zweckmäßig die beiden Gehäuse durch mehrere verteilt entlang der Dichtlinie zwischen den dichtend aneinanderliegenden Gehäusebereichen angeordnete Spannschrauben verbunden.

Weiter ist bevorzugt vorgesehen, daß der Filtereinsatz im Hauptstrom-und die Zentrifuge im Nebenstrom vom Schmieröl durchströmbar ist. Größere Schmutzpartikel werden so in jedem Falle schnellstmöglich aus dem Schmieröl durch den Filtereinsatz ausgefiltert; die vom Filtereinsatz nicht ausfilterbaren feineren Schmutzpartikel werden im Nebenstrom durch die Zentrifuge nach und nach entfernt und im Rotor der Zentrifuge angesammelt.

Zur Erzielung einer einfachen und zeitsparenden Montage des Aggregatemoduls an der übrigen Brennkraftmaschine wird schließlich noch vorgeschlagen, daß das Aggregatemodul einen Anschlußflansch aufweist, mittels welchem es an einen entsprechenden Gegenflansch der Brennkraftmaschine unter Herstellung von Strömungsverbindungen anflanschbar ist.

Ein Ausführungsbeispiel des erfindungsgemäßen Aggregatemoduls wird im folgenden anhand einer Zeichnung erläutert. Die Figuren der Zeichnung zeigen:
- Figur 1: ein erstes Aggregat als Teil eines Aggregatemoduls, in Ansicht,
- Figur 2: ein zweites Aggregat des Aggregatemoduls, ebenfalls in Ansicht und
- Figur 3: das aus den beiden Aggregaten gemäß Figur 1 und Figur 2 zusammengebaute Aggregatemodul, ebenfalls in Ansicht.

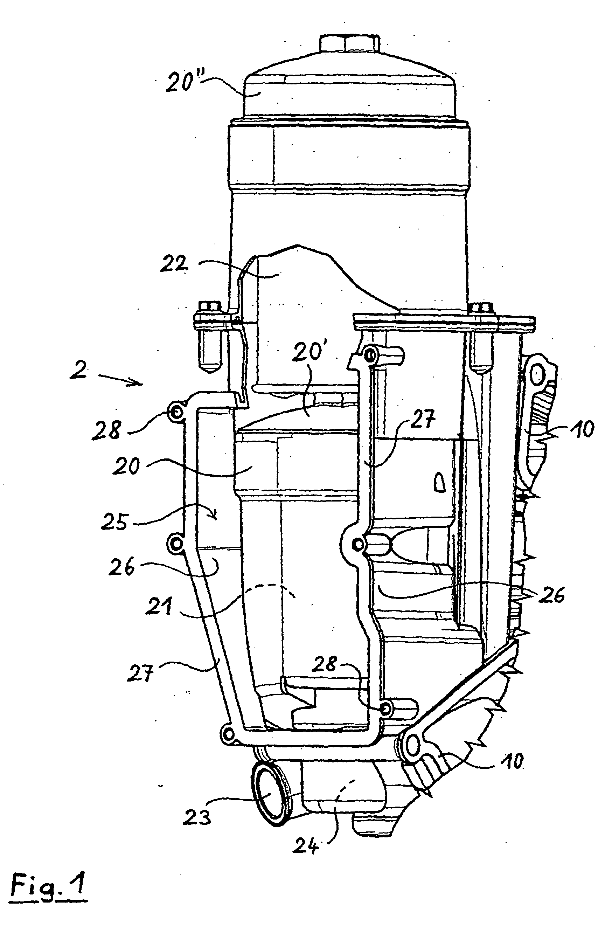

Figur 1 der Zeichnung zeigt ein erstes Aggregat 2, das hier eine Vorrichtung zum Abtrennen von Verunreinigungen aus dem Schmieröl einer Brennkraftmaschine ist. Dieses Aggregat 2 umfaßt einen Filtereinsatz 21 und eine Zentrifuge 22. Der Filtereinsatz ist hier verdeckt innerhalb eines Gehäuses 20 angeordnet, das unmittelbar über dem Filtereinsatz 21 mit einem ersten Schraubdeckel 20' verschlossen ist. Dieser erste Deckel 20' ist druckfest ausgeführt, weil unter ihm der volle Öldruck ansteht. Weiter oben im Gehäuse 20 ist oberhalb des Filtereinsatzes 21 und des ersten Deckels 20' die Zentrifuge 22 angeordnet. Nach oben hin ist das Gehäuse 20 oberhalb der Zentrifuge 22 durch einen zweiten Schraubdeckel 20'' verschlossen. Dieser zweite Schraubdeckel 20'' kann leichter ausgeführt sein, weil in diesem Bereich des Gehäuses 20 kein Überdruck herrscht.

Über einen Zuleitungskanal 23 gelangt zu reinigendes Schmieröl zunächst zum Außenumfang des Filtereinsatzes 21 und nach dessen Durchströmen durch einen Ableitungskanal 24 zu den Schmierstellen der zugehörigen Brennkraftmaschine, die hier nicht dargestellt ist. Mit dieser Brennkraftmaschine ist das Aggregat 2 mittels eines hier teilweise sichtbaren Anschlußflansches 10 verbindbar.

Ein Teil des durch den Filtereinsatz 21 geströmten Schmieröls gelangt im Nebenstrom in die Zentrifuge 22 und durchströmt diese, wobei das strömende Schmieröl nach dem Rückstrahlprinzip die Zentrifuge 22 antreibt. Das aus der Zentrifuge 22 austretende gereinigte Schmieröl, das nun drucklos ist, strömt unter Schwerkraftwirkung durch einen Rücklaufkanal 25 nach unten und schließlich zur Brennkraftmaschine, üblicherweise in deren Ölwanne.

Zur Bildung eines Rücklaufweges mit einem für die schnelle Ableitung des Schmieröls hinter der Zentrifuge 22 nötigen großen Querschnitt ist hier der Rücklaufkanal 25 außenseitig am Gehäuse 20 vorgesehen. Hierzu besitzt das Gehäuse 20 einstückig Gehäusebereiche 26, die im wesentlichen in Form von tangentialen Wänden vom zylindrischen Außenumfang des Gehäuses 20 parallel zueinander vorstehen. Diese Gehäusebereiche 26 enden in einer ebenen Flanschfläche 27, in deren Verlauf mehrere Gewindebohrungen 28 vorgesehen sind. Diese Flanschfläche 27 dient zur Verbindung des in Figur 1 gezeigten ersten Aggregats 2 mit einem weiteren Aggregat.

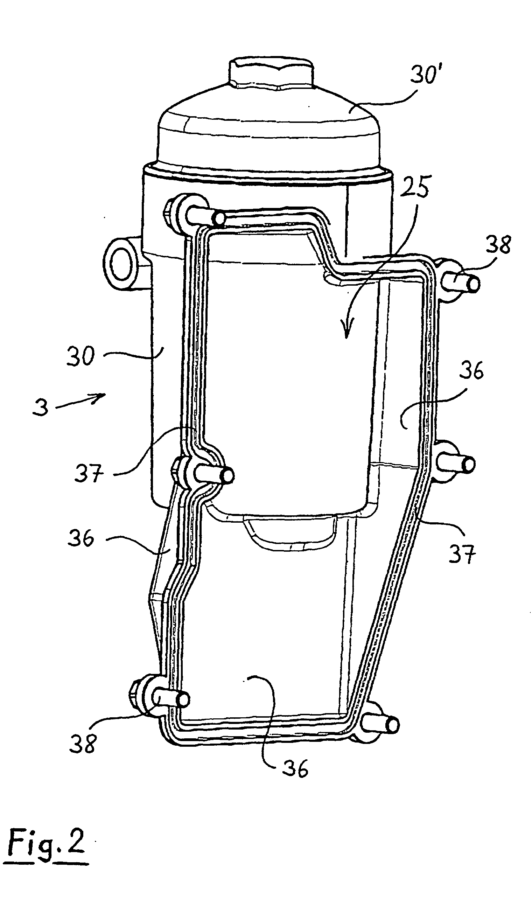

Ein weiteres Aggregat 3 ist in Figur 2 gezeigt. Bei diesem Aggregat 3 handelt es sich beispielsweise um einen Kraftstofffilter. Das zweite Aggregat 3 besitzt ebenfalls ein im wesentlichen zylindrisches Gehäuse 30, das etwas kleiner ist als das Gehäuse 20 des ersten Aggregats 2. Oberseitig ist auch das Gehäuse 30 durch einen Schraubdeckel 30' verschlossen. Sowohl der Deckel 30' als auch die Deckel 20', 20'' können abgeschraubt werden, um bei Bedarf einen Filtereinsatzwechsel oder einen Wechsel des Rotors der Zentrifuge 22 vornehmen zu können.

Ähnlich wie das Gehäuse 20 des ersten Aggregats 2 besitzt auch das Gehäuse 30 des zweiten Aggregats 3 Gehäusebereiche 36, die mit dem übrigen Gehäuse 30 einstückig ausgeführt sind. Die Gehäusebereiche 36 sind hier ebenfalls in Form von Wänden ausgeführt, die zum Teil etwa tangential zu dem zylindrischen Gehäuse 30 verlaufen und zum Teil auch über das Gehäuse 30 nach unten hin verlängert sind. Auch hier enden die Gehäusebereiche 36 in einer Flanschfläche 37, die deckungsgleich mit der Flanschfläche 27 am Gehäuse 20 des ersten Aggregats 2 ausgebildet ist. Im Verlauf der Flanschfläche 37 sind hier mehrere Spannschrauben 38 durch passende Durchbrechungen geführt. Mittels dieser Spannschrauben 38 kann das zweite Aggregat 3 dichtend mit dem ersten Aggregat 2 verbunden werden. Die nötige Dichtigkeit wird durch eine im Bereich der Flanschflächen 27, 37 vorgesehene Dichtung gewährleistet.

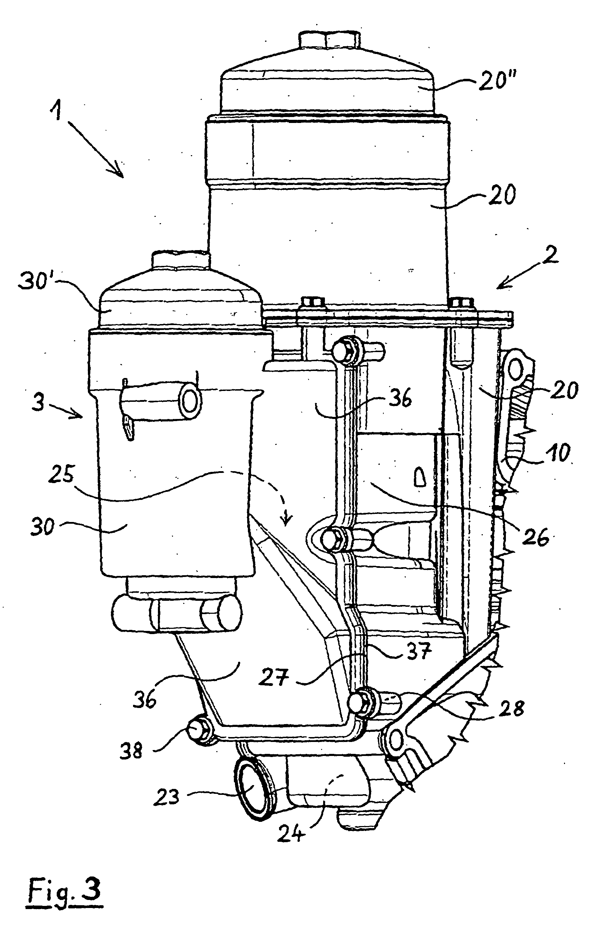

Die dichtend miteinander verbundenen Gehäusebereiche 26, 36 bilden, wie die Figur 3 zeigt, zusammen zum einen die mechanische Verbindung zwischen dem ersten Aggregat 2 und dem zweiten Aggregat 3 und zum anderen zusammen den Rücklaufkanal 25 für das aus der Zentrifuge 22 austretende Öl, wobei hier der geforderte große Querschnitt des Rücklaufkanals 25 gewährleistet ist. Damit kann es nicht zu einem Rückstau von Schmieröl auf dem Weg aus der Zentrifuge 22 in die Ölwanne der zugehörigen Brennkraftmaschine kommen, so daß eine zuverlässige Funktion der Zentrifuge 22 gewährleistet ist. Für die Anordnung des Rücklaufkanals 25 wird der zwischen den beiden Aggregaten 2 und 3 vorhandene, bisher nicht genutzte und auch nicht durch andere Aggregate nutzbare Raum verwendet. Hierdurch wird eine besonders platzsparende Lösung erreicht.

Das komplette Aggregatemodul 1 aus den beiden Aggregaten 2, 3 ist in Figur 3 dargestellt. Hier ist nun das zweite Aggregat 3 mittels der Spannschrauben 38, die in die Gewindebohrungen 28 eingeschraubt sind, dichtend und mechanisch fest mit dem ersten Aggregat 2 verbunden. Innerhalb der Gehäusebereiche 26, 36 liegt der Rücklaufkanal 25 für das aus der Zentrifuge kommende gereinigte Schmieröl. Die Deckel 20', 20'', 30' der Gehäuse 20, 30 der Aggregate 2, 3 weisen alle nach oben, so daß eine leichte Zugänglichkeit bei der Wartung gewährleistet ist. Die Mittelachsen der beiden Gehäuse 20, 30 verlaufen hier im wesentlichen parallel zueinander. Auch die Flanschflächen 27, 37 sind hier in einer im wesentlichen parallel zu den Mittelachsen der beiden Gehäuse 20, 30 verlaufenden Ebene angeordnet.

Die Figur 3 verdeutlicht besonders gut die kompakte Konstruktion des Aggregatemoduls 1 mit dem Filtereinsatz 21, der Zentrifuge 22 und dem weiteren Aggregat 3, hier ein Kraftstofffilter. Dabei wird für dieses Aggregatemodul 1 im Vergleich zu einem bekannten Aggregatemodul, das keine Zentrifuge umfaßt, kein zusätzlicher Bauraum in der Umgebung des Aggregatemoduls 1 beansprucht. Damit ist innerhalb einer vorhandenen Brennkraftmaschine oder -maschinenbaureihe ein einfacher und problemloser Austausch des bekannten Aggregatemoduls gegen das funktional erweiterte neue Aggregatemodul 1 möglich.

## Patentansprüche

1. Aggregatemodul (1) einer Brennkraftmaschine, wobei das Modul (1) als erstes Aggregat eine Vorrichtung (2) zum Abtrennen von Verunreinigungen aus dem Schmieröl der Brennkraftmaschine umfaßt, wobei die Vorrichtung (2) einen Filtereinsatz (21), eine mittels durchströmenden Schmieröls antreibbare Freistrahlzentrifuge (22), mindestens einen Zuleitungskanal (23) für zu reinigendes Schmieröl, einen Ableitungskanal (24) für durch den Filtereinsatz (21) geströmtes Schmieröl und einen Rücklaufkanal (25) für durch die Zentrifuge (22) geströmtes Schmieröl aufweist und wobei die Zentrifuge (22) über dem Filtereinsatz (21) in einem gemeinsamen Gehäuse (20) angeordnet ist,
**dadurch gekennzeichnet,**
- **daß** das Modul (1) ein weiteres Aggregat (3) der Brennkraftmaschine umfaßt,
- **daß** das weitere Aggregat (3) ein Gehäuse (30) aufweist, das neben dem Gehäuse (20) der Vorrichtung (2) angeordnet und mit dem Gehäuse (20) lösbar verbunden ist und
- **daß** die beiden Gehäuse (20, 30) zwischen sich durch dichtend aneinanderliegende, wandförmige Gehäusebereiche (26, 36) den Rücklaufkanal (25) bilden.

2. Aggregatemodul nach Anspruch 1, **dadurch gekennzeichnet, daß** die beiden Gehäuse (20, 30) jeweils eine im wesentlichen zylindrische Grundform mit etwa parallel oder unter einem spitzen Winkel zueinander verlaufenden Mittelachsen aufweisen und daß die den Rücklaufkanal (25) bildenden Gehäusebereiche (26, 36) in der Hauptsache jeweils durch annähernd tangential zu den Gehäusemantelflächen verlaufende Wände gebildet sind.

3. Aggregatemodul nach Anspruch 1, **dadurch gekennzeichnet, daß** die beiden Gehäuse (20, 30) jeweils eine im wesentlichen zylindrische Grundform mit etwa parallel oder unter einem spitzen Winkel zueinander verlaufenden Mittelachsen aufweisen und daß die den Rücklaufkanal (25) bildenden Gehäusebereiche (26, 36) in der Hauptsache einerseits durch annähernd tangential zur Mantelfläche des einen Gehäuses (20, 30) verlaufende Wände und andererseits durch einen einen Teil des anderen Gehäuses (30, 20) bildenden flachen Deckel gebildet sind.

4. Aggregatemodul nach Anspruch 2 oder 3, **dadurch gekennzeichnet, daß** die Gehäusebereiche (26, 36) in einer ebenen Flanschfläche (27, 37) unter Zwischenlage einer Dichtung deckungsgleich aneinander anliegen.

5. Aggregatemodul nach Anspruch 4, **dadurch gekennzeichnet, daß** die ebene Flanschfläche (27, 37) parallel oder unter einem spitzen Winkel zur Mittelachse des Gehäuses (20) der Vorrichtung (2) und/oder des Gehäuses (30) des weiteren Aggregats (3) verläuft.

6. Aggregatemodul nach einem der vorangehenden Ansprüche, **dadurch gekennzeichnet, daß** die beiden Gehäuse (20, 30) durch mehrere verteilt entlang der Dichtlinie zwischen den dichtend aneinanderliegende Gehäusebereichen (26, 36) angeordnete Spannschrauben (38) verbunden sind.

7. Aggregatemodul nach einem der vorangehenden Ansprüche, **dadurch gekennzeichnet, daß** der Filtereinsatz (21) im Hauptstrom und die Zentrifuge (22) im Nebenstrom vom Schmieröl durchströmbar ist.

8. Aggregatemodul nach einem der vorangehenden Ansprüche, **dadurch gekennzeichnet, daß** es einen Anschlußflansch (10) aufweist, mittels welchem es an einen entsprechenden Gegenflansch der Brennkraftmaschine unter Herstellung von Strömungsverbindungen anflanschbar ist.

## Claims

1. Module (1) of units of a combustion engine, with the module (1) comprising as the first unit a unit (2) for separating contaminants from the lubricating oil of the combustion engine, with the unit (2) being provided with a filter element (21), a free-jet centrifuge (22) drivable by lubricating oil flowing through it, at least one inlet duct (23) for lubricating oil to be purified, one outlet duct (24) for lubricating oil that has flown through the filter element (21), and one return duct (25) for lubricating oil that has flown through the centrifuge (22), and with the centrifuge (22) being placed above the filter element (21) in a common housing (20),
**characterized in that**
- the module (1) comprises a second unit (3) of the combustion engine,
- the second unit (3) is provided with a housing (30) which is arranged adjacent to the housing (20) of the unit (2) and is connected to the housing (20) in a removable manner, and
- the two housings (20, 30) are forming between them the return duct (25) by wall-type housing sections (26, 36) abutting against one another in a sealing manner.

2. Module of units according to claim 1, **characterized in that** the two housings (20, 30) each have a substantially cylindrical basic shape with central axes running approximately in parallel or at an acute angle to one another, and that the housing sections (26, 36) forming the return duct (25) are each mainly formed by walls running roughly tangentially to the outer casing surfaces.

3. Module of units according to claim 1, **characterized in that** the two housings (20, 30) each have a substantially cylindrical basic shape with central axes running approximately in parallel or at an acute angle to one another, and that the housing sections (26, 36) forming the return duct (25) are, on the one hand, mainly formed by walls running roughly tangentially to the outer casing surface of the one housing (20, 30) and, on the other hand, by a flat cover forming a part of the other housing (30, 20).

4. Module of units according to claim 2 or 3, **characterized in that** the housing sections (26, 36) abut against one another congruently, in a flat flange facing (27, 37) with a seal as intermediate layer.

5. Module of units according to claim 4, **characterized in that** the flat flange facing (27, 37) is running in parallel or at an acute angle to the central axis of the housing (20) of the unit (2) and/or of the housing (30) of the second unit (3).

6. Module of units according to one of the preceding claims, **characterized in that** the two housings (20, 30) are connected by means of several locking screws (38) distributed along the sealing line between the housing sections (26, 36) abutting against one another in a sealing manner.

7. Module of units according to one of the preceding claims, **characterized in that** the lubricating oil can flow through the filter element (21) in full flow and through the centrifuge (22) in partial flow.

8. Module of units according to one of the preceding claims, **characterized in that** it is provided with a mounting flange (10) by means of which it can be flanged to a corresponding companion flange of the combustion engine, with flow connections being made.

## Revendications

1. Module (1) d'unités d'un moteur à combustion interne, d'une structure telle que le module (1) comprend comme première unité un dispositif (2) de séparation d'impuretés hors du lubrifiant du moteur à combustion interne, que le dispositif (2) comprend une cartouche filtrante (21), une centrifugeuse (22) à jet libre qui peut être entraînée au moyen du lubrifiant qui la traverse, au moins un canal d'amenée (23) du lubrifiant à nettoyer, un canal d'évacuation (24) du lubrifiant qui a traversé la cartouche filtrante (21) et un canal de retour (25) du lubrifiant qui a traversé la centrifugeuse (22), et que la centrifugeuse (22) est disposée au-dessus de la cartouche filtrante (21) dans un carter commun (20),
**caractérisé en ce que**
- le module (1) comprend une autre unité (3) du moteur à combustion interne, **en ce que**
- l'autre unité (3) comprend un carter (30) qui est disposé à côté du carter (20) du dispositif (2) et est assemblé avec le carter (20) de façon détachable, et **en ce que**
- les deux carters (20, 30) forment entre eux le canal de retour (25) au moyen de zones (26, 36) de carters adjacentes entre elles de façon étanche, en forme de parois.

2. Module d'unités selon la revendication 1, **caractérisé en ce que** la forme fondamentale de chacun des deux carters (20, 30) est essentiellement cylindrique, leurs axes centraux étant à peu près parallèles entre eux ou formant entre eux un angle aigu, et **en ce que** chacune des zones (26, 36) des carters qui forment le canal de retour (25) consiste principalement en parois de tracés à peu près tangentiels aux surfaces d'enveloppes des carters.

3. Module d'unités selon la revendication 1 **caractérisé en ce que** la forme fondamentale de chacun des deux carters (20, 30) est essentiellement cylindrique, leurs axes centraux étant à peu près parallèles entre eux ou formant entre eux un angle aigu, et **en ce que** chacune des zones (26, 36) des carters qui forment le canal de retour (25) consiste principalement, d'une part en parois de tracés à peu près tangentiels aux surfaces d'enveloppes de l'un des carters (20, 30), et d'autre part en un couvercle plat qui constitue une partie de l'autre carter (30, 20).

4. Module d'unités selon la revendication 2 ou 3, **caractérisé en ce que** les zones (26, 36) des carters, entre lesquelles un joint d'étanchéité est intercalé, coïncident l'une avec l'autre dans une surface plane (27, 37) de bride.

5. Module d'unités selon la revendication 4, **caractérisé en ce que** le tracé de la surface plane (27, 37) de bride est parallèle à l'axe central du carter (20) du dispositif (2) et/ou du carter (30) de l'autre unité (3) ou forme un angle aigu avec cet axe central.

6. Module d'unités selon l'une quelconque des revendications précédentes, **caractérisé en ce que** les deux carters (20, 30) sont assemblés au moyen de plusieurs vis de serrage (38) disposées de façon répartie le long de la ligne d'étanchéité entre les zones (26, 36) de carter adjacentes de façon étanche.

7. Module d'unités selon l'une quelconque des revendications précédentes, **caractérisé en ce que** la cartouche filtrante (21) peut être traversée par le lubrifiant dans le courant principal et que la centrifugeuse (22) peut l'être dans le courant secondaire.

8. Module d'unités selon l'une quelconque des revendications précédentes, **caractérisé en ce qu'**il comporte une bride de raccord (10), au moyen de laquelle il peut être bridé sur une contre-bride correspondante du moteur à combustion interne en formant des connexions de flux.
